# EUROPÄISCHE PATENTANMELDUNG

(11) **EP 1 374 976 A1**
(43) Veröffentlichungstag der Anmeldung: **02.01.2004**
(21) Anmeldenummer: 02013759.2
(22) Anmeldetag: 20.06.2002
(51) Int. Cl.: B01D 53/86, F01N 3/20, C01C 1/02, C01C 1/08, B01J 19/12

(54) **Verfahren und Reaktor zur Umsetzung von Harnstoff in Ammoniak sowie Abgasreinigungsanlage**

(71) Anmelder: SIEMENS AKTIENGESELLSCHAFT, 80333 München (DE)
(72) Erfinder: Hofmann, Lothar, 96264 Altenkunstadt (DE); Rusch, Klaus, 96123 Litzendorf (DE)
(74) Vertreter: Tergau & Pohl Patentanwälte

(57) **Zusammenfassung**

Die Erfindung betrifft ein Verfahren zur Umsetzung von Harnstoff CO(NH₂)₂ in Ammoniak NH₃ , wobei eine wässrige Harnstoff-Lösung (H) zu einer Reaktionskammer (31) geführt wird. Zur Umsetzung wird die wässrige Harnstoff-Lösung (H) mit elektromagnetischer Strahlung (S) abgestimmter Wellenlänge bestrahlt, so dass Harnstoff in der Lösung selektiv durch Strahlungsabsorption derart angeregt wird, dass diese unter Bildung von Ammoniak aufgespalten wird. Die entstandene Ammoniak-Lösung (F) wird von der Reaktionskammer (31) abgeführt und steht vorzugsweise als Reduktionsmittel zur Entstickung eines Abgases (A) in einem nachgeschalteten SCR-Verfahren zur Verfügung. Die Erfindung betrifft weiterhin einen Reaktor (1), insbesondere zur Durchführung des Verfahrens, sowie eine Abgasreinigungsanlage zum Abbau von Stickoxiden in einem Abgas (A).

## Beschreibung

Die Erfindung betrifft ein Verfahren zur Umsetzung von Harnstoff in Ammoniak mittels Anwendung von elektromagnetischer Strahlung. Die Erfindung betrifft weiterhin einen Reaktor zur Umsetzung von Harnstoff in Ammoniak, insbesondere zur Durchführung des Verfahrens, sowie eine Abgasreinigungsanlage zum Abbau von Stickoxiden in einem Abgas mit Hilfe von Ammoniak als Reduktionsmittel.

In Anlagen zur selektiven katalytischen Entstickung (Selective Catalytic Reduction = SCR) von Rauchgasen, insbesondere von Rauchgasen eines Kraftwerks oder eines Dieselmotors, wird als Reduktionsmittel üblicherweise Ammoniak-Gas oder ein Ammoniak-Wasser-Gemisch verwendet. An einem sogenannten SCR-Katalysator werden dann die Stickoxide auch in Anwesenheit von Sauerstoff mit dem Reduktionsmittel Ammoniak in Stickstoff und Wasser umgesetzt. Der Transport, die Lagerung und die Handhabung von Ammoniak unterliegt strengen sicherheitstechnischen Vorschriften. Demgegenüber ist Harnstoff eine vergleichsweise harmlose Substanz. Den direkten Einsatz von Harnstoff als Reduktionsmittel in einem SCR-Reaktor steht das technische Problem der Hydrolyse, d.h. der Umwandlung von Harnstoff in Ammoniak, und der Eindüsung des Harnstoffs in den SCR-Reaktor entgegen.

Die Verwendung von Harnstoff in SCR-Reaktoren ist bisher nur bei Kleinanlagen, wie z.B. Blockheizkraftwerken oder bei Dieselmotoren bekannt, wobei eine direkte Eindüsung des Harnstoffes in den SCR-Reaktor in der Regel mit Unterstützung durch Druckluft erfolgt. Für ein System mit mehreren Düsen ist dabei der Harnstoffstrom für jede einzelne Düse zu regeln, was technisch aufwendig ist.

Um dieses Problem zu lösen wurde in der Vergangenheit vorgeschlagen, die quantitative Zersetzung des Harnstoffs durch Hydrolyse zu NH₃ und CO₂ dem Eindüsen des Reduktionsmittels in den SCR-Reaktor vorzuschalten. Hierzu ist es aus der EP 0 487 886 B1 bekannt, Harnstofflösung aus einem Behälter mittels einer Pumpe und eine Sprühvorrichtung auf Verdampferrohre aus AlMg₅ eines Röhrenverdampfers aufzusprühen und zu verteilen. Ein Verdampfer wird elektrisch und/oder mit Heißluft oder Heißdampf auf 140 °C bis 300 °C geheizt. Hierdurch wird der Harnstoff vor dem Kontakt mit dem Reduktionskatalysator zu NH₃ und CO₂ hydrolysiert, wobei die Verdampfung und Hydrolyse des Harnstoffs zu NH₃ und CO₂ an den Oberflächen des Verdampfers und nachfolgenden Hydrolysekatalysators erfolgt. Die Aktivkomponenten des Hydrolysekatalysators sind derart beschichtet, dass die quantitative Umwandlung von Harnstoff in Ammoniak und Kohlendioxid katalysiert wird und zugleich die Bildung unerwünschter, fester Reaktionsprodukte des Harnstoffs weitgehend inhibiert wird.

Die thermische Zersetzung des Harnstoffs in einem Verdampfungsprozess ist ebenso in der WO 00/07695 beschrieben. Hierzu wird ein Mikrowellen-Hydrolyse-Reaktor zur Umsetzung von Harnstoff in Ammoniak vorgeschlagen, welcher eine Reaktionskammer mit einer Zuführ-Einrichtung zur Zuführung einer Harnstoff-Lösung sowie eine Abführ-Einrichtung zur Abführung eines Ammoniak-Wasser-Gemisches aufweist. In der Reaktionskammer ist eine Katalysator-Einrichtung angeordnet. Weiterhin ist eine Mikrowellen-Sende-Einrichtung zur Zuführung von Energie zu der in der Reaktions-Kammer befindlichen Harnstofflösung vorgesehen, welche die erforderliche Heizleistung für den Verdampfungsprozess liefert. Im Betrieb des Mikrowellen-Hydrolyse-Reaktors gemäß der WO 00/07695 wird dabei durch die Zuführ-Einrichtung eine wässrige Harnstoff-Lösung der Reaktionskammer zugeführt. Die Lösung durchdringt die Katalysator-Einrichtung und wird dort durch die Mikrowellen der Mikrowellen-Sende-Einrichtung erhitzt. Durch katalytisch aktive Substanz der Katalysatoreinrichtung wird das Temperaturniveau und die aufzuwendende Energie herabgesetzt, bei der eine Hydrolyse des Harnstoffs unter Bildung von Ammoniak erfolgt. Dieser wird durch die Abführeinrichtung zusammen mit dem durch den Verdampfungsprozess gebildeten Wasserdampf abgeführt. Dieses Gemisch kann dann in einem SCR-Reaktor zur Entstickung verwendet werden. Das katalytisch aktive Material ist für die Hydrolyse aktiv und kann z.B. auf Titandioxid-Basis ausgeführt sein. In einer alternativen Ausgestaltung des Reaktors gemäß der WO 00/07695 sind mehrere, z.B. fünf Reaktionskammern vorgesehen, welche als kapillare Verdampferrohre ausgebildet sind. Diese sind endseitig mit Verteilern zur Führung einer Flüssigkeit von der Zuführ-Einrichtung zur Abführeinrichtung verbunden. In den Verdampferrohren sind jeweils Katalysator-Einrichtungen vorgesehen.

Bei den aus dem Stand der Technik bekannten Verfahren sind nachteiligerweise neben der Notwendigkeit des Einsatzes eines Hydrolysekatalysators zur Umsetzung von Harnstoff in Ammoniak auch beträchtlicher Energiebedarf für den Verdampfungsprozess zu verzeichnen.

Der Erfindung liegt nunmehr die Aufgabe zugrunde, Ammoniak zur Entstickung von Abgasen aus Verbrennungsanlagen in möglichst einfacher und sicherheitstechnisch leicht handzuhabender Form bereitzustellen. So soll ein Verfahren zur Umsetzung von Harnstoff in Ammoniak angegeben werden sowie ein Reaktor, der insbesondere für diese Zwecke geeignet ist und darüber hinaus weniger Prozessenergie für die Umsetzung benötigt.

Erfindungsgemäß wird die auf ein Verfahren zur Umsetzung von Harnstoff in Ammoniak gerichtete Aufgabe dadurch gelöst, dass eine wässrige Harnstoff-Lösung zur einer Reaktionskammer geführt wird, die wässrige Harnstoff-Lösung mit elektromagnetischer Strahlung abgestimmter Wellenlänge bestrahlt wird, so dass Harnstoff CO(NH₂)₂ in der Lösung selektiv durch Strahlungsabsorption derart angeregt wird, dass dieser unter Bildung von Ammoniak NH₃ aufgespalten wird, und die entstandene Ammoniak-Lösung von der Reaktionskammer abgeführt wird.

Die Erfindung geht hierbei von der Erkenntnis aus, dass sich bei der aus dem Stand der Technik bekannten thermischen Zersetzung des Harnstoffs zu Ammoniak aufgrund der entsprechend hohen Umsetzungstemperaturen unerwünschte Reaktionsprodukte bilden.

Im Einzelnen ist es bekannt, dass sich Harnstoff bei Temperaturen oberhalb von etwa 160 °C beim Einspritzen in den Abgasstrom zersetzt. Für die Zersetzung werden neben der Bildung von Ammoniak und Kohlendioxid als unerwünschter Reaktionskanal die Bildung von Aminoradikalen NH₂ mit anschließenden weitgehend unbekannten Sekundärreaktionen verzeichnet. Als weitere Produkte der thermischen Harnstoffzersetzung sind Cyanursäure, Isozyansäure und ähnliches nachgewiesen. Weiterhin ist es bekannt, dass sich Harnstoff bei extrem raschem Erhitzen auf etwa 350 °C unter Bildung von Ammoniak und eines Isozyansäuremoleküls HCNO, zersetzt. Insbesondere bei Temperaturen unterhalb 350 °C und bei langsamem Erhitzen wurde die Bildung von Polymeren der Isozyansäure, beispielsweise feste, unlösbare Cyanursäure (HCNO)₃, beobachtet: Diese Polymere neigen zum Auskristallisieren, was bei dem zum Einbringen und Einmischen der Harnstofflösung in den Abgasstrom eingesetzten Bauteilen zu unerwünschten Ablagerungen führen kann. Daneben ist bei einer Eindüsung der Harnstofflösung direkt in den Abgasstrom die dafür erforderliche thermische Energie aus dem Abgas selbst zu entnehmen. Damit ist der Temperaturbereich, der bei diesen Verfahren eingesetzt werden kann eingeschränkt. Aber auch eine thermische Zersetzung der Harnstofflösung vor der Einbringung in den Abgasstrom durch einen Verdampfungsprozess ist nicht so kontrollierbar, dass die Bildung unerwünschter zur Kristallisation neigender Nebenprodukte, wie oben dargelegt, sicher unterbunden werden kann.

Die thermische Zersetzung ist folglich unspezifisch und erfordert einen hohen Energieeinsatz, da neben dem Energieeintrag in den Harnstoff in erster Linie das Lösungsmittel, beispielsweise Wasser, verdampft werden muss.

Mit der Erfindung wird demgegenüber ein völlig anderer Weg vorgeschlagen, Harnstoff in wässriger Lösung zu Ammoniak umzusetzen, wobei von den bisher bekannten thermischen Verfahren zur Zersetzung des Harnstoffs völlig Abkehr genommen wird. Das vorgeschlagene Verfahren ist hoch selektiv, da durch die Abstimmung der Wellenlänge gezielt auf einen entsprechenden Anregungsübergang des Harnstoff-Moleküls in der Lösung genau der Reaktionskanal selektiert wird, der zur Photodissoziation oder Prädissoziation des Harnstoffs unter Bildung von Ammoniak führt. Hierdurch kann die Umsetzung von Harnstoff zu Ammoniak durch die Wahl der Wellenlänge und optimal zusätzlich auch der Intensität der elektromagnetischen Strahlung gezielt stimuliert und der Umsetzungsprozess kontrolliert werden. Ein hoher Energieeinsatz, wie bei einem Verdampfungsprozess, ist nicht zu erwarten, da das Lösungsmittel selbst, d.h. das Wasser, aufgrund der selektiven Anregung keine Energie aufnimmt, d.h. insbesondere nicht verdampft wird. Gegenüber einer thermischen Zersetzung findet bei dem Verfahren gemäß der Erfindung demnach eine "kalte" Umsetzung von Harnstoff zu Ammoniak in der wässrigen Lösung statt, wobei durch die Kontrolle des Umsetzungsprozesses unerwünschte Nebenprodukte, die zur Ablagerungen führen könnten, verhindert werden.

Die Ammoniakerzeugung erfolgt vorteilhafterweise durch hinsichtlich der Wellenlänge gezielt abgestimmte elektromagnetische Strahlung in der Harnstofflösung, ohne dabei das Lösungsmittel zu verdampfen. Da es sich um eine kalte Umsetzung handelt, d.h. die Temperatur des Lösungsmittels bei dem Umsetzungsprozess weitgehend unverändert bleibt, ist aufgrund der erhöhten Löslichkeit des Ammoniaks einer tieferen Temperatur des Lösungsmittels eine entsprechend hohe Ausbeute an gelöstem Ammoniak, d.h. an Ammoniakwasser, bei der Umsetzung zu verzeichnen, welches von der Reaktionskammer abgeführt wird.

Als möglicher Pumpübergang zur Stimulation des gewünschten Dissoziationsprozesses ist beispielsweise ein geeigneter Vibrations-Rotations-Übergang vom Grundzustand des Harnstoffmoleküls in das Dissoziationskontinuum auszuwählen, welcher eine ausreichend große Übergangswahrscheinlichkeit (Reaktionsrate) für die Ammoniakbildung im Kontinuumszustand aufweist. Geeignete Übergänge ins Dissoziationskontinuum sind durch Ultraviolett-Strahlung, durch Infrarot-Strahlung oder durch Mikrowellen-Strahlung anregbar, wobei bei entsprechender Intensität der Strahlungsquelle auch Mehrphotonenabsorption nicht ausgeschlossen ist. Als Strahlungsquellen sind hier IR- oder UV-Laser kommerziell erhältlich. Insbesondere abstimmbare Diodenlaser- oder Diodenlaser-Arrays bieten sich als kostengünstige Strahlungsquellen an.

In bevorzugter Ausgestaltung wird zur Überwachung der Umsetzung von Harnstoff in Ammoniak die Absorption der Strahlung bestimmt. Durch den Absorptionsprozess wird ein Teil der elektromagnetischen Strahlung der bestimmter Wellenlänge oder eines bestimmten Wellenlängenbereichs durch den Harnstoff in der Lösung absorbiert. Der nicht absorbierte Teil wird transmittiert und kann mit einem geeigneten Detektor, beispielsweise einer Photodiode, nachgewiesen werden. Die Differenz zwischen eingestrahlter Strahlungsintensität und transmittierter Strahlungsintensität liefert unmittelbar den absorbierten Anteil der Strahlung, der durch den Umsetzungsprozess von Harnstoff in Ammoniak verbraucht wurde. Über die Bestimmung und Überwachung der absorbierten Strahlung kann der Prozess hinsichtlich seiner Effizienz, d.h. der Ausbeute an Ammoniak, kontrolliert werden.

In weiterer bevorzugter Ausgestaltung wird zur Überwachung der Umsetzung die Ammoniakkonzentration bestimmt. Die Bildungsrate von Ammoniak kann über eine Messung der Konzentration von Ammoniak in der wässrigen Lösung bestimmt und kontrolliert werden. Ein Messung der Ammoniak-konzentration ist beispielsweise über eine Leitfähigkeitsmessung oder über eine pH-Wert-Bestimmung möglich. Durch die Kombination von Bestimmung der Ammoniakkonzentration und einer Absorptionsmessung der absorbierten Strahlung ist eine umfassende Diagnostik des Umsetzungsprozesses möglich.

Vorzugsweise wird die gewonnene Ammoniak-Lösung als Reduktionsmittel zur Entstickung einem Abgas zugemischt und mit dem Abgas einem SCR-Reaktor zugeführt. Bei einem Verfahren zur katalytischen Reduzierung von Stickoxiden im Abgas einer Verbrennungsanlage wird ein Katalysator zur katalytischen Umsetzung der in dem Abgas enthaltenen Stickoxide in unbedenkliche Stoffe eingesetzt. Die Stickoxide werden dabei nach dem Verfahren der selektiven katalytischen Reduzierung (SCR-Verfahren) aus dem Abgas entfernt. Dabei wird in das Abgas vor dem Durchströmen eines so genannten SCR- oder DENOₓ-Katalysators ein Reduktionsmittel eingebracht, das die im Abgas enthaltenen Stickoxide in Anwesenheit von Sauerstoff am Katalysator zu unschädlichem Stickstoff und Wasser umsetzt. Mit der vorliegenden Erfindung kann als Reduktionsmittel unmittelbar Ammoniakwasser verwendet werden, dessen Bildung nach dem erfindungsgemäßen Verfahren durch selektive Photodissoziation von Harnstoff wie oben beschrieben simuliert wurde. Das Ammoniakwasser kann direkt als Reduktionsmittellösung in das Abgas eingedüst werden. Gegenüber der Eindüsung von Harnstofflösung in den Abgasstrom und anschließender thermischer Zersetzung wird bei direkter Eindüsung von Ammoniakwasser keine nennenswerte Energie dem Abgasstrom entnommen. Des Weiteren entfallen die Probleme mit unerwünschten Ablagerungen infolge unlöslicher Zersetzungsprodukte, die aus der thermischen Zersetzung von Harnstoff resultieren.

Vorzugsweise wird vor dem Einbringen in das Abgas die Ammoniak-Lösung einem Trägergas zur Ausbildung eines Gemisches zugemischt, welches Gemisch in das Abgas zerstäubt wird. Die Zumischung der Ammoniak-Lösung in ein Trägergas ist eine optionale Möglichkeit, um die anfallende Menge der Stickoxide im Abgas, die aufgrund der häufigen Lastwechsel bei einem Kraftfahrzeug-Motor starken Schwankungen unterworfen ist, an die eingedüste Reduktionsmittellösung anzupassen. Dadurch ist einerseits eine möglichst optimale Funktion des Katalysators herzustellen und gleichzeitig ein unerwünschter Austritt von Ammoniakgas an die Umwelt zu vermeiden. Weiterhin kann der Volumeneinssatz der eingedüsten Reduktionsmittellösung durch entsprechende Steuerung des Volumenstroms des Trägergases bedarfsmäßig auch Wechselbelastungen relativ sicher angepasst werden. Dabei kann die Trägergas-unterstützte Zerstäubung derart erfolgen, dass die Geschwindigkeit des Trägergases in einem Strömungskanal zunächst auf zumindest Schallgeschwindigkeit erhöht wird, und dem anschließend das Ammoniakwasser zur Ausbildung des Gemisches zugeführt wird, welches dann anschließend in die Abgasleitung zerstäubt wird. Hierdurch ist eine Entkopplung des Trägergasstroms vom Flüssigkeitsmassenstrom der Ammoniak-Lösung erreicht, so dass ein einfacher und zuverlässiger Betrieb für eine nachgeschaltete Abgas-Entstickung ermöglich ist.

Die auf einen Reaktor zur Umsetzung von Harnstoff in Ammoniak gerichtete Aufgabe wird erfindungsgemäß gelöst durch einen Reaktor mit einer Reaktionskammer, die eine Zuführ-Einrichtung zur Zuführung von wässriger Harnstoff-Lösung in die Reaktionskammer sowie eine Abführ-Einrichtung zur Abführung von Ammoniakwasser aufweist, und mit einer elektromagnetischen Sendeeinrichtung, mittels derer elektromagnetische Strahlung abgestimmter Wellenlänge in die Reaktionskammer einstrahlbar ist und bei der die Wellenlänge derart abgestimmt ist, dass bei einem Einstrahlen von Strahlung in der Reaktionskammer befindliche Harnstoff in der Harnstoff-Lösung selektiv durch Strahlungsabsorption anregbar ist und dass dabei der Harnstoff unter Bildung von Ammoniak aufspaltbar ist.

Die im Hinblick auf das Verfahren angeführten Vorteile und bevorzugten Ausgestaltungen sind sinngemäß auch auf den Reaktor zu übertragen.

In bevorzugter Ausgestaltung weist der Reaktor dabei eine Empfangseinrichtung zur Bestimmung der absorbierten Strahlung auf. Weiterhin ist vorzugsweise ein Ammoniaksensor zur Überwachung der Ammoniakkonzentration vorgesehen.

Um infolge des Betriebs des Reaktors entstehende unerwünschte Gase, beispielsweise die Bildung von Kohlendioxid bei einem Hydrolyseprozess, aus dem Reaktor zu entfernen, ist eine Gasabscheideeinrichtung zur Abscheidung von gasförmigen unerwünschten Nebenprodukten vorgesehen. Die Bildung von Kohlendioxid in dem Prozess könnte insbesondere zu einer Druckerhöhung in dem Reaktor oder dem angeschlossenen Leitungssystem führen, welcher durch die Gasabscheideeinrichtung mit einem Überdruck-Entlastungsventil auf einen zulässigen Wert begrenzt werden kann.

In besonders bevorzugter Ausgestaltung findet der vorbeschriebene Reaktor Anwendung in einer Abgasreinigungsanlage zum Abbau von Stickoxiden in einem Abgas mittels eines Reduktionsmittels, wobei der Reaktor zur Erzeugung und Bereitstellung von Ammoniakwasser als Reduktionsmittel vorgesehen ist.

Nachfolgend werden Ausführungsbeispiele der Erfindung anhand der Zeichnung näher erläutert. Dabei zeigen in einer stark vereinfachten schematischen Darstellung:
- FIG 1: eine Vorrichtung zum Zerstäuben eines Reduktionsmittels mit einem Reaktor gemäß der Erfindung,
- FIG 2: in einer Detailansicht den in FIG 1 dargestellten Reaktor.

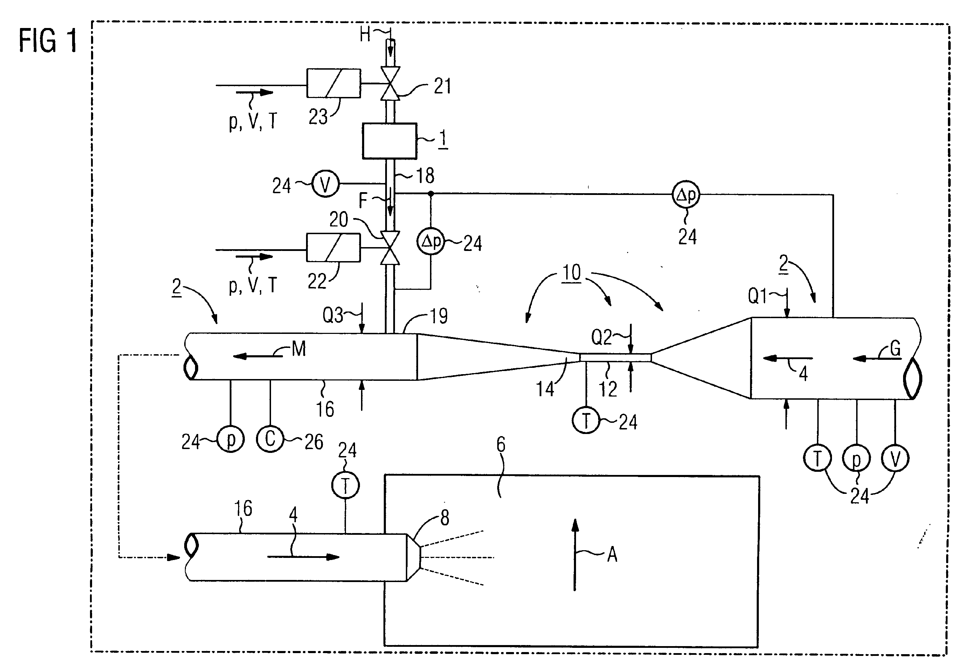

Gemäß der FIG 1 umfasst die Vorrichtung zum Zerstäuben der Ammoniak-Lösung F einen im Querschnitt gesehenen kreisrunden Strömungskanal 2, der in Betrieb in Strömungsrichtung 4 von einem Trägergas G, insbesondere Druckluft von beispielsweise einem Druck von 6 bar, durchströmt wird. Der Strömungskanal 2 mündet mit seinem in Strömungsrichtung 4 gelegenen Ende in ein Volumen 6. Das Ende des Strömungskanals 2 ist dabei als eine nur ansatzweise angedeutete Einstoffdüse 8 ausgestaltet. Der Strömungskanal 2 ist in einem Teilabschnitt als eine Düse, insbesondere als eine so genannte Lavaldüse 10, ausgebildet. Die Lavaldüse 10 verjüngt sich in Strömungsrichtung 4 von einem maximalen Strömungsquerschnitt Q₁ zunächst bis auf einen minimalen Strömungsquerschnitt Q₂ eines Halsabschnitts 12. Dem Halsabschnitt 12 nachfolgend ist ein Diffusor 14 nachgeordnet, so dass sich die Querschnittsfläche auf einen Strömungsquerschnitt Q₃ vergrößert, der kleiner ist als der Strömungsquerschnitt Q₁. An den Diffusor 14 schließt sich ein weiterer Kanalabschnitt 16 an, so dass der Diffusor 14 von der Einstoffdüse beabstandet ist.

Im Ausführungsbeispiel gemäß FIG 1 mündet unmittelbar im Anschluss an das in Strömungsrichtung 4 gelegene Ende des Diffusors 14 eine Zuleitung 18 an einer Mündungsstelle 19 in den Kanalabschnitt 16. Über die Zuleitung 18 wird Ammoniakwasser F in den Strömungskanal 2 eingeleitet und mischt sich in diesem mit dem Trägergas G und bildet zusammen mit diesem Trägergas G ein Gemisch M.

Die Ammoniak-Lösung F wird dabei in dem Reaktor 1 durch Umsetzung von Harnstoff CO(NH₂)₂ in Ammoniak NH₃ in wässriger Lösung gewonnen. Hierzu wird Harnstoff-Lösung H dem Reaktor 1 zugeführt und die durch den Umsetzungsprozess in Reaktor 1 entstandene Ammoniak-Lösung F über die Zuleitung 18 entnommen. In der Zuleitung 18 ist als Dosiereinrichtung ein Dosierventil 20, vorgesehen, über das der in den Strömungskanal 2 eingeleitete Massenstrom an Ammoniak-Lösung F gesteuert und insbesondere geregelt werden kann. Das Dosierventil 20 steht hierzu mit einer Steuer- oder Regeleinheit 22 in Verbindung. Dem Reaktor 1 vorgeschaltet weist die Zuleitung 18 ein weiteres Dosierventil 21 auf, über das der in den Reaktor 1 eingeleitete Massenstrom an Harnstofflösung H gesteuert und insbesondere geregelt werden kann. Das Dosierventil 21 steht hierzu ebenfalls mit einer entsprechenden Steuer- oder Regeleinheit 23 in Verbindung.

Eine derartige Vorrichtung zur Zerstäubung der Ammoniak-Lösung ist insbesondere für den Einsatz in einem Kraftfahrzeug und zur Zerstäubung der Ammoniak-Lösung als Reduktionsmittel in einer Abgasleitung vorgesehen. Das in der Figur 1 gezeigte Volumen 6 ist dabei die Abgasleitung. Die Abgasleitung 6 wird von einem Abgas A durchströmt. In Strömungsrichtung des Abgases A ist nach der Eindüsung der Ammoniak-Lösung F ein Katalysator (nicht dargestellt), inbesondere ein SCR-Katalysator, zur Reduzierung der im Abgas A enthaltenen Stickoxide vorgesehen. Mit der Zerstäubungsvorrichtung ist eine sichere Eindüsung der jeweils aktuell benötigten Menge an Reduktionsmittellösung, d.h. einer Ammoniak-Lösung F, sichergestellt. Gleichzeitig ist vermieden, dass die Reduktionsmittellösung beispielsweise an der Wand des Strömungskanals 2 entgegen der Strömungsrichtung 4 entlang kriecht. Diese Vorteile beruhen im Wesentlichen darauf, dass durch die spezielle Ausgestaltung der Vorrichtung die Strömung des Trägergases G im Bereich der Lavaldüse 10 von dem Massenstrom des Ammoniakwassers F aus dem Reaktor 1 entkoppelt ist.

Beim Betrieb der Vorrichtung werden die Strömungsparameter, insbesondere der Druck des Trägergases G, derart auf die Lavaldüse 10 abgestimmt, dass im Halsabschnitt 12 das Erreichen der Schallgeschwindigkeit sichtbar erreicht wird. Bei der Konzeption der Lavaldüse 10 wird deren Geometrie dabei derart ausgelegt, dass die kritische Strömung bei einem gewünschten Druck, beispielsweise in einem Bereich von etwa 6 Bar, erreicht wird.

Im Diffusor 14 erreicht die Trägergasströmung Überschallgeschwindigkeit, bis sie einen Verdichtungsstoß erfährt und mit Unterschallgeschwindigkeit weiterströmt. Im Bereich der Unterschallgeschwindigkeit wird die Ammoniak-Lösung F aus dem Reaktor 1 über die Zuleitung 18 zugeleitet. Hierdurch ist ausgeschlossen, dass sich Flüssigkeitsanteile des Ammoniak-Wassers F stromaufwärts im Strömungskanal 2 ausbreiten können. Prinzipiell ist ein Zuführen der Reduktionsmittellösung auch unmittelbar im Anschluss an den Halsabschnitt 12 möglich. Vorteilhaft ist, dass die Zuleitung des Ammoniak-Wassers F im Anschluss an den Bereich erfolgt, in dem das Trägergas G auf Schallgeschwindigkeit beschleunigt ist, um die Entkoppelung der Strömung der Reduktionsmittellösung von der des Trägergases G zu gewährleisten. Dadurch ist mit relativ geringem Aufwand die Ausbildung der kritischen Strömung in der Lavaldüse 10 ermöglicht. Für die Ausbildung und Aufrechterhaltung der kritischen Strömung und der gesamten Funktionsweise ist - im Vergleich zu einer Venturi-Zerstäuberdüse, bei der die Flüssigkeit im Halsabschnitt der Venturi-Düse eingebracht wird - ein wesentlich geringerer Trägergas-Massenstrom ausreichend. Das Strömungsverhalten des Trägergases G durch die Lavaldüse 10 ist auch unabhängig von der eingebrachten Menge an Ammoniak-Wasser F. Letztere lässt sich auch sehr einfach variieren, ohne dass die Funktionsweise beeinträchtigt wird. So lässt sich bei der Vorrichtung das Massenstrom-Verhältnis der Ammoniak-Lösung F zu dem Trägergas G in einem weiten Bereich, beispielsweise von größer 1:5 bis kleiner 1:100 einstellen.

Zudem kann in einfacher Weise der Massenstrom des Trägergases G erhöht werden, um eine geeignete Temperierung, insbesondere Kühlung, der Einstoffdüse 8 am Eintrittsort in das Volumen 6 zu erzielen. Diese Kühlung führt zu einer thermischen Entkopplung der Zuleitung 18 vom Volumen 6, d.h. die Rückwirkung des heißen Abgases A auf die Ammoniak-Lösung F wird minimiert oder sogar ausgeschlossen. Für die thermische Entkopplung ist zudem zwischen der Mündungsstelle 19 der Zuleitung 18 und der Einstoffdüse 8 eine geeignete Wegstrecke des Kanalabschnitts 16 vorgesehen. Diese Strecke kann ohne Einfluss auf die Funktionsweise sehr groß gewählt werden und liegt bei dem Einsatz der Zerstäubungsvorrichtung in einem Kraftfahrzeug beispielsweise in einem Bereich von einigen Zentimetern bis Metern, beispielsweise zwischen 10 cm und 5 m.

Um eine sichere und bedarfsgerechte Zuleitung der in dem Reaktor 1 gewonnenen Ammoniak-Lösung F in die Abgasleitung zu ermöglichen, sind vorzugsweise eine Mehrzahl von einzelnen Messeinrichtungen 24 vorgesehen, die alternativ oder in Kombination zur Erfassung von Strömungswerten der Ammoniak-Lösung F des Trägergases G und des Gemisches M dienen. In FIG 1 sind die Messeinrichtungen 24 schematisch jeweils durch einen Kreis angedeutet. Die Art der Messeinrichtung wird symbolisiert durch ein V für eine Durchflussmessung, durch T für eine Erfassung der Temperatur, durch p für eine Erfassung des Drucks und Δp für eine Erfassung eines Differenzdrucks.

Die Messeinrichtungen 24 übermitteln dabei vorzugsweise ihre Messergebnisse an die Steuer/Regeleinheit 22, 23. Diese steuert oder regelt in Abhängigkeit der erhaltenen Messwerte die Durchflussmenge der Ammoniak-Lösung F durch das Dosierventil 20 ausgangsseitig des Reaktors 1 bzw. die Durchflussmenge der Harnstoff-Lösung H durch das Dosierventil 21 eingangsseitig des Reaktors 1. Auf diese Weise sind die Stoffströme der wässrigen Lösungen sehr genau einstellbar und der Umsatz von Harnstoff zu Ammoniak in der wässrigen Lösung in dem Reaktor 1 genau kontrollierbar. Für eine hochgenaue Einstellung der Durchflussmenge von dem Reaktor 1 entnommener Ammoniak-Lösung F ist hierzu insbesondere auch eine Differenzdruckmessung vorgesehen, die den Druck vor und nach dem Dosierventil 20 präzise erfasst, da die Durchflussmenge durch das Dosierventil 20 maßgebend von dieser Druckdifferenz abhängt.

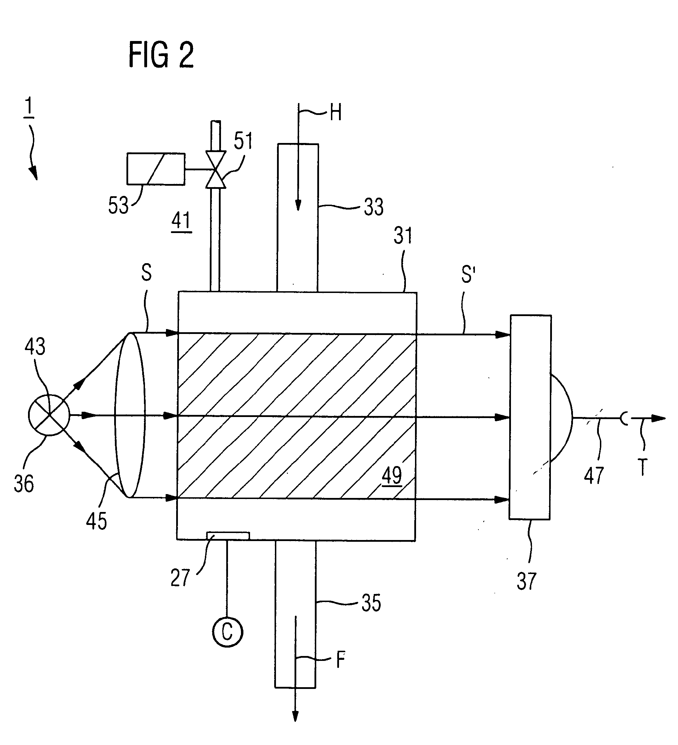

Zur Überwachung der Ammoniakkonzentration c ist eigens eine Messeinrichtung 26 mit dem Strömungskanal 2 verbunden. Dieser Ammoniaksensor 26 ermöglicht eine Überprüfung der in dem Gemisch M vorliegenden Ammoniak-Konzentration c. Ein weiterer Ammoniaksensor kann in unmittelbarer Nähe des Reaktors 1 oder, wie nachfolgend in FIG 2 beschrieben, in dem Reaktor 1 selbst angeordnet sein, um die Umsatzrate von Harnstoff zu Ammoniak in dem Reaktor 1 zu diagnostizieren.

Neben der Überwachung, Steuerung und insbesondere Regelung der Durchflussmenge der Harnstoff-Lösung H und der Ammoniak-Lösung F ist in vorliegendem Beispiel einer trägergasunterstützten Eindüsung auch die Überwachung, Steuerung und insbesondere Regelung des Trägergasstroms vor und durch die Lavaldüse 10 wesentlich. Hierzu werden vorzugsweise sowohl vor der Lavaldüse 10 als auch im Bereich des Halsabschnitts 12 Messwerte erfasst, um hieraus ableiten zu können, ob die Strömung tatsächlich die gewünschte Schallgeschwindigkeit im Halsabschnitt 12 erreicht. Diese dem Trägergasstrom zugeordneten Messwerte werden vorzugsweise in der Steuer- oder Regeleinrichtung 22, 23 verarbeitet. Als Steuer- oder Regelgröße dient hierzu auch eine im Bereich der Einstoffdüse 8 erfasste Temperatur T.

Die Erfassung der Strömungswerte oder Strömungsparameter in den unterschiedlichen Abschnitten des Strömungskanals 2 und der Zuleitung 12 dient allgemein dazu, möglichst viele und genaue Informationen über den tatsächlichen Strömungszustand zu erhalten. Über eine geeignete Steuerung oder Regelung ist sowohl eine sichere und genaue Dosierung als auch die Aufrechterhaltung einer kritischen Strömung im Halsabschnitt 12 gewährleistet. Es sei aber angemerkt, dass die Verwendung eines Trägergases G bei der Eindüsung der Ammoniak-Lösung F als Reduktionsmittel zur Entstickung eines Abgases A nicht zwingend ist. In alternativer Ausgestaltung könnte durch eine geeignete Pumpenanordnung die Stoffströme, d.h. die Harnstoff-Lösung H bzw. das in dem Reaktor gewonnene Ammoniak-Wasser F mit geeignetem Druck durch das System gepumpt werden, insbesondere zur Eindüsung des Ammoniak-Wassers F durch die Düse 8 in das mit dem Abgas A beaufschlagte Volumen 6.

Der in FIG 1 gezeigte Reaktor 1 zur Umsetzung von Harnstoff in Ammoniak in wässriger Lösung ist in FIG 2 detailliert dargestellt. Der Reaktor 1 zur Umsetzung von Harnstoff CO (NH₂)₂ in Ammoniak NH₃ weist eine Reaktionskammer 31 auf. Eine Zuführ-Einrichtung 33 ist als eine mit der Reaktionskammer 1 verbundene Leitung ausgebildet und dient zur Zuführung von wässriger Harnstoff-Lösung H in die Reaktionskammer 31. Eine Abführ-Einrichtung 35, welche zur Abführung von Ammoniak-Wasser F aus der Reaktionskammer 31 dient, ist ebenfalls mit der Reaktionskammer 31 verbunden und als Rohrleitung ausgestaltet. Die Zuführ-Einrichtung 33 und die Abführ-Einrichtung 35 sind an gegenüberliegenden Enden der Reaktionskammer 31 vorgesehen. Der Reaktor 1 weist weiterhin eine Sendeeinrichtung 36 auf, mittels derer elektromagnetische Strahlung S abgestimmter Wellenlänge in die Reaktionskammer 31 einstrahlbar ist. Die Sendeeinrichtung 36 ist hierbei außerhalb der Reaktionskammer 1 angeordnet und umfasst eine Strahlungsquelle 43 für elektromagnetische Strahlung geeigneter Wellenlänge sowie eine Kollimationseinheit 45. Die Kollimationseinheit 45 ist als optische Linse ausgestaltet, mittels derer die von der Strahlungsquelle 43 emittierte elektromagnetische Strahlung S kollimiert werden kann und gezielt in die Reaktionskammer 31 einstrahlbar ist. Die durch die Reaktionskammer 31 transmittierte Stahlung S' ist mittels einer Empfangseinrichtung 37 detektierbar. Die Empfangseinrichtung 37 ist hierzu mit einer Signalleitung 47 ausgestattet, an der das Transmissionssignal T messtechnisch erfasst werden kann. In einfacher Ausgestaltung handelt es sich bei der Empfangseinrichtung 37 um eine Photodiode, die für die Wellenlänge oder den Wellenlängenbereich, auf die die elektromagnetische Sendeeinrichtung 36 abgestimmt ist, die erforderliche Empfindlichkeit aufweist. Auf diese Weise könnte beispielsweise als Transmissionssignal T ein entsprechender Photostrom einer als Photodiode ausgestalteten Empfangseinrichtung 37 gemessen werden. An die Reaktionskammer 31 ist weiterhin eine Gasabscheideeinrichtung 41 angeflanscht. Die Gasabscheideeinrichtung 41 umfasst ein Auslassventil 51 sowie eine Steuereinheit 53 mittels derer das Auslassventil 51 ansteuerbar ist. Die Gasabscheideeinrichtung 41 dient der Abscheidung von im Betrieb des Reaktors 1 entstehenden unerwünschten Gasen, insbesondere von CO₂, die sich bei der Umsetzung von Harnstoff zu Ammoniak in dem Reaktor 1 bilden können. Zum quantitativen Nachweis des gebildeten Ammoniaks weist die Reaktionskammer 31 einen Ammoniaksensor 27 auf, der zur Erfassung der Ammoniakkonzentration c ausgangsseitig der Reaktionskammer 31 dient.

Im Betrieb des Reaktors 1 wird durch die Zuführ-Einrichtung 33 eine wässrige Harnstoff-Lösung H der Reaktionskammer 31 zugeführt. Die Lösung durchströmt die Reaktionskammer 31 und wird durch die elektromagnetische Strahlung S abgestimmter Wellenlänge bestrahlt. Die Wellenlänge der Strahlung S ist derart abgestimmt, dass Harnstoff in der Lösung selektiv durch Strahlungsabsorption angeregt wird, so dass dieser unter Bildung von Ammoniak aufgespalten wird. Die Umsetzung von Harnstoff in Ammoniak in der Lösung vollzieht sich dabei in einem Wechselwirkungsvolumen 49, welches durch das Strahlungsfeld der elektromagnetischen Strahlung S und der wässrigen Lösung in der Reaktionskammer 31 festgelegt ist.

Die in dem Reaktionsvolumen 49 durch Einwirkung der elektromagnetischen Strahlung S stimulierte selektive Bildung von Ammoniak NH₃ aus Harnstoff CO(NH₂)₂ kann durch Bestimmung der in dem Reaktionsvolumen 49 durch den Harnstoff absorbierten elektromagnetischen Strahlung quantitativ überprüft werden. Hierzu wird die aus der Reaktionskammer 31 austretende transmittierte Strahlung S' auf einer geeigneten Empfangseinrichtung 37 detektiert und als Transmissionssignal T ausgewertet. Simultan dazu kann mittels des Ammoniaksensors 27 die Ammoniakkonzentration c ausgangsseitig in dem Reaktor bestimmt werden. Die in dem Reaktor 1 entstandene Ammoniak-Lösung F wird von der Reaktionskammer 31 über die Abführ-Einrichtung 35 abgeführt und steht für weitere Zwecke als Reduktionsmittel in einem nachgeschalteten katalytischen Entstickungsprozess in einem SCR-Verfahren zur Verfügung.

Das vorgeschlagene Verfahren zur Umsetzung von Harnstoff in Ammoniak ist hoch selektiv, da durch die gezielte Abstimmung der Wellenlänge oder eines Wellenlängenbereichs der Strahlung S auf einen Anregungsübergang oder Übergänge des Harnstoff-Moleküls in der Lösung genau der Reaktionskanal selektiert wird, der zur Photodissoziation des Harnstoffs und der Bildung von Ammoniak in der wässrigen Lösung führt. Dabei ist es auch möglich im Zuge einer sogenannten Prädissoziation zu dem gewünschten Ergebnis zu gelangen. Bei der Prädissioziation handelt es sich um den Zerfall eines mehrfach angeregten, mehratomigen Moleküls in dissoziierte (nicht ionisierte) Bruchstücke, bevor die im gesamten angeregten Molekül gespeicherte, häufig sogar die Dissoziationsenergie überwiegende Anregungsenergie als elektromagnetische Strahlung wieder abgegeben wird. Es findet bei der Prädissoziation also ein strahlungsloser Übergang in einen dissoziierten Zustand statt, auch wenn die Dissoziationsgrenze des jeweiligen Zustands noch nicht erreicht ist. Als möglicher Pumpübergang zur Stimulation des Dissoziationsprozesses ist beispielsweise ein geeigneter Vibrations-Rotations-Übergang vom Grundzustand des Harnstoffmoleküls in einen quasi gebundenen metastabilen Zustand oder direkt in das Dissoziationskontinuum auszuwählen, welcher eine ausreichend große Übergangswahrscheinlichkeit für die nachfolgende Bildung freier Ammoniakmoleküle aufweist.

Das Verfahren sowie der beschriebene Reaktor sind kontinuierlich, d.h. für einen Durchlaufprozess geeignet. Alternativ dazu wäre es auch vorstellbar den Reaktor diskontinuierlich zu Betreiben und in der Reaktionskammer 31 nur bedarfsweise durch die strahlungsinduzierte selektive Umwandlung eine darin befindliche vorgegebene Menge von Harnstoff-Lösung H in Ammoniak-Wasser F umzusetzen und in der Reaktionskammer 31 als Reservoir für kurze Zeit vorzuhalten.

## Patentansprüche

1. Verfahren zur Umsetzung von Harnstoff CO(NH₂)₂ in Ammoniak NH₃, wobei
a) eine wässrige Harnstoff-Lösung (H) zu einer Reaktionskammer (31) geführt wird,
b) die wässrige Harnstoff-Lösung (H) mit elektromagnetischer Strahlung (S) abgestimmter Wellenlänge bestrahlt wird, so dass Harnstoff CO(NH₂)₂ in der Lösung selektiv durch Strahlungsabsorption derart angeregt wird, dass dieser unter Bildung von Ammoniak NH₃ aufgespalten wird, und
c) die entstandene Ammoniak-Lösung (F) von der Reaktionskammer (31) abgeführt wird.

2. Verfahren nach Anspruch 1,
wobei zur Überwachung der Umsetzung von Harnstoff CO(NH₂)₂ in Ammoniak NH₃ die Absorption der Strahlung (S) bestimmt wird.

3. Verfahren nach Anspruch 1 oder 2,
wobei zur Überwachung der Umsetzung die Ammoniakkonzentration (c) bestimmt wird.

4. Verfahren nach Anspruch 1, 2 oder 3
wobei die Ammoniak-Lösung (F) als Reduktionsmittel zur Entstickung einem Abgas (A) zugemischt und mit dem Abgas (A) einem SCR-Reaktor zugeführt wird.

5. Verfahren nach Anspruche 4,
wobei vor dem Einbringen in das Abgas (A) die Ammoniak-Lösung (F) einem Trägergas (G) zur Ausbildung eines Gemisches (M) zugemischt wird, welches Gemisch (M) in das Abgas (A) zerstäubt wird.

6. Reaktor (1) zur Umsetzung von Harnstoff CO(NH₂)₂ in Ammoniak NH₃ mit einer Reaktionskammer (31), die eine Zuführ-Einrichtung (33) zur Zuführung von wässriger Harnstoff-Lösung (H) in die Reaktionskammer (31) sowie eine Abführ-Einrichtung (35) zur Abführung von Ammoniakwasser (F) aufweist, und mit einer elektromagnetischen Sendeeinrichtung (36) mittels derer elektromagnetische Strahlung (S) abgestimmter Wellenlänge in die Reaktionskammer (31) einstrahlbar ist und bei der die Wellenlänge derart abgestimmt ist, dass bei einem Einstrahlen von Strahlung (S) in der Reaktionskammer (31) befindlicher Harnstoff CO(NH₂)₂ in der Harnstoff-Lösung (H) selektiv durch Strahlungsabsorption anregbar ist und dass dabei der Harnstoff CO(NH₂)₂ unter Bildung von Ammoniak aufspaltbar ist.

7. Reaktor (1) nach Anspruch 6,
der eine Empfangseinrichtung (37) zur Bestimmung der absorbierten Strahlung aufweist.

8. Reaktor (1) nach Anspruch 6 oder 7,
der einen Ammoniaksensor (21) zur Überwachung der Ammoniakkonzentration (c) aufweist.

9. Reaktor (1) nach Anspruch 6, 7 oder 8,
der eine Gasabscheideeinrichtung (41) zur Abscheidung von im Betrieb entstehenden unerwünschten Gasen, insbesondere von CO₂, aufweist.

10. Abgasreinigungsanlage zum Abbau von Stickoxiden in einem Abgas (A) mit Hilfe eines Reduktionsmittels, umfassend einen Reaktor (1) nach einem der Ansprüche 6 bis 9 zur Erzeugung und Bereitstellung von Ammoniakwasser (F) als Reduktionsmittel.
